# EUROPEAN PATENT APPLICATION

(11) **EP 4 787 457 A1**
(43) Date of publication of application: **05.08.2026**
(21) Application number: 26152006.8
(22) Date of filing: 15.01.2026
(51) Int. Cl.: H01M 4/134, H01M 4/36, H01M 4/38, H01M 4/587, H01M 4/62

(54) **ANODE LAYER, BATTERY, AND METHOD FOR PRODUCING ANODE LAYER**

(30) Priority: 24.01.2025 JP 2025010493
(71) Applicant: Toyota Jidosha Kabushiki Kaisha, Toyota-shi, Aichi-ken 471-8571 (JP)
(72) Inventor: MATSUHARA, Shinsuke, Aichi-ken, 471-8571 (JP)
(74) Representative: Kuhnen & Wacker Patent- und Rechtsanwaltsbüro PartG mbB

(57) **Abstract**

A main object of the present disclosure is to provide an anode layer of which volume change amount is suppressed. The present disclosure achieves the object by providing an anode layer including a composite active material, a carbon-based active material, and a binder, wherein the composite active material includes a Si-based active material, and a carbon-containing layer covering at least a part of a surface of the Si-based active material; the carbon-based active material includes a hydroxyl group on its surface; and the binder is a hydrophobic binder including an aromatic group ring.

## Description

### Technical Field

The present disclosure relates to an anode layer, a battery, and a method for producing an anode layer.

### Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry.

For example, Patent Literature 1 discloses a lithium ion secondary battery provided with an anode containing a Si-based anode active material containing silicon, a graphite, and an anode binder. Also, Patent Literature 2 discloses an anode wherein a Li ion is doped to an anode mixture layer containing an anode active material not including Li. Further, Patent Literature 3 discloses an anode active material for non-aqueous electrolyte secondary battery characterized in that a surface of a composite body including three phases of a fine Si phase, a silicon oxide, and a carbonaceous matter, is covered with a carbon. Furthermore, Patent Literature 4 discloses a non-aqueous electrolyte secondary battery provided with an anode using an active material that is a carbon material capable of storing and releasing lithium.

### Citation List

### Patent Literatures

Patent Literature 1: Japanese Patent Application Laid-Open (JP-A) No. 2017-050203
Patent Literature 2: JP-A No. 2018-116833
Patent Literature 3: JP-A No. 2006-092969
Patent Literature 4: JP-A H10-228896

### Summary of Disclosure

### Technical Problem

The theoretical capacity of Si is large and it is advantageous to allow a battery to have high energy density. On the other hand, the volume change of Si during charge and discharge is large. For this reason, there is also a risk of increasing the volume change of an anode layer including an anode active material containing Si (Si-based active material) during charge and discharge. If the volume change amount of the anode layer is large, for example, improving the strength and increasing the size of the restraining member in the battery are required, and there is a risk of decreasing the energy density of the battery. In this point, as in Patent Literature 1, suppressing the volume change amount of the anode layer has been tried by using a specified anode binder, but there is a room for further improvement for the volume change amount of the anode layer.

The present disclosure has been made in view of the above circumstances and a main object thereof is to provide an anode layer of which volume change amount is suppressed.

### Solution to Problem

[1] An anode layer comprising a composite active material, a carbon-based active material, and a binder, wherein
   the composite active material includes a Si-based active material, and a carbon-containing layer covering at least a part of a surface of the Si-based active material;
   the carbon-based active material includes a hydroxyl group on its surface; and
   the binder is a hydrophobic binder including an aromatic group ring.
[2] The anode layer according to [1], wherein a weight ratio of Si in the composite active material with respect to a weight of the hydrophobic binder is 0.5 or more and 8.5 or less.
[3] The anode layer according to [2], wherein the ratio is 0.8 or more.
[4] The anode layer according to [2] or [3], wherein the ratio is 5.0 or less.
[5] The anode layer according to any one of [1] to [4], wherein an amount of the hydroxyl group is 0.10 mmol/g or more.
[6] The anode layer according to any one of [1] to [4], wherein an amount of the hydroxyl group is 0.50 mmol/g or more.
[7] The anode layer according to any one of [1] to [6], wherein the carbon-based active material contains a phenolic hydroxyl group as the hydroxyl group.
[8] The anode layer according to any one of [1] to [7] comprising a polyimide as the hydrophobic binder.
[9] The anode layer according to any one of [1] to [8] comprising a graphite as the carbon-based active material.
[10] A battery comprising a cathode layer, an anode layer, and an electrolyte layer arranged between the cathode layer and the anode layer, wherein
   the anode layer is the anode layer according to any one of [1] to [9].
[11] A method for producing the anode layer according to any one of [1] to [9], the method comprising:
   a first step of obtaining a first mixture by mixing the composite active material with the hydrophobic binder or a precursor of the hydrophobic binder;
   a second step of obtaining a second mixture by adding the carbon-based active material to the first mixture and mixing; and
   a third step of forming the anode layer using the second mixture.

### Advantageous Effects of Disclosure

The present disclosure exhibits an effect of obtaining an anode layer of which volume change amount is suppressed.

### Brief Description of Drawings

FIGS. 1A and 1B are diagrams explaining the mechanism in which the anode layer in the present disclosure solves the problem.
FIG. 2 is a schematic cross-sectional view exemplifying the battery in the present disclosure.
FIG. 3 is a flow chart exemplifying the method for producing the anode layer in the present disclosure.
FIG. 4 is a flow chart exemplifying the method for producing the anode layers in Comparative Example 2 and Example 2.

### Description of Embodiments

The anode layer, the battery, and the method for producing the anode layer in the present disclosure will be hereinafter explained in details. Incidentally, each drawing described as below is a schematic view, and the size and the shape of each portion are appropriately exaggerated in order to be understood easily.

### A. Anode layer

The anode layer in the present disclosure contains a composite active material, a carbon-based active material, and a binder. Also, the composite active material includes a Si-based active material, and a carbon-containing layer covering at least a part of a surface of the Si-based active material; the carbon-based active material includes a hydroxyl group on its surface; and the binder is a hydrophobic binder including an aromatic group ring.

According to the present disclosure, the composite active material including the carbon-containing layer, a carbon-based active material including the hydroxyl group on its surface, and a hydrophobic binder including an aromatic group ring are included, and thus the volume change of the anode layer is suppressed.

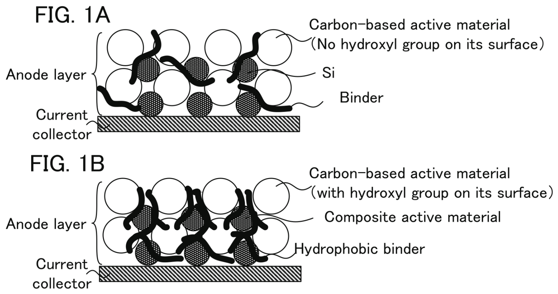

Here, the mechanism in which the anode layer in the present disclosure can solve the problem will be explained in details with reference to FIGS. 1A and 1B. FIG. 1A is a schematic cross-sectional view exemplifying the anode layer different from the present disclosure, and FIG. 1B is a schematic cross-sectional view exemplifying the anode layer in the present disclosure. First, from the viewpoint of high energy density of a battery, and from the viewpoint of imparting good electron conductivity, using a Si-based active material and a carbon-based active material in combination has been considered. In this point, when a carbon-based active material not including a hydroxyl group on its surface, Si, and a binder are used as shown in FIG. 1A, there is the binder dispersed in the anode layer, but if a hydrophobic binder is used as the binder, there is a risk that the binder is localized around the carbon-based active material, but not around Si. This is because the hydrophobic binder has a high affinity with carbon (C element).

In contrast, when a composite active material including a carbon-containing layer, a carbon-based active material including a hydroxyl group on its surface, and a hydrophobic binder are used in combination as in FIG. 1B, it is considered that the hydrophobic binder is locally present around the composite active material. This is because, since the composite active material includes the carbon-containing layer, the affinity of the hydrophobic binder and the composite active material is high, and since there is the hydroxyl group on the surface of the carbon-based active material, the affinity of the hydrophobic binder and the carbon-based active material is low. In this manner, in the anode layer in the present disclosure, the binder can be localized around the composite active material, and thus the binder can absorb the expansion and contraction of the composite active material including the Si-based active material well. As a result, the volume change of the anode layer is suppressed.

### 1. Composite active material

The composite active material in the present disclosure includes a Si-based active material, and a carbon-containing layer covering at least a part of a surface of the Si-based active material.

Examples of the Si-based active material may include a simple substance of Si, a Si alloy, a Si oxide, and a Si composite. Examples of the Si alloy may include a Si-Al-based alloy, a Si-Sn-based alloy, a Si-In-based alloy, a Si-Ag-based alloy, a Si-Pb-based alloy, a Si-Sb-based alloy, a Si-Bi-based alloy, a Si-Mg-based alloy, a Si-Ca-based alloy, a Si-Ge-based alloy, and a Si-Pb-based alloy. The Si alloy may be a two component alloy, and may be a multi component alloy of three components or more. Examples of the Si oxide may include SiO.

In the Si composite, usually, a Si component and the other components (other elements) are independently present. Examples of the other elements may include C element. The composite body of Si and C (SiC composite) corresponds to so-called Si-C-based active material. In the Si-C-based active material, for example, silicon is dispersed inside the carbon particle.

The shape of the Si-based active material is usually a granular shape. Also, the Si-based active material may be a solid particle, may be a hollow particle, and may be a porous particle. There are no particular limitations on the void rate in the porous particle, and for example, it is 4% or more and 40% or less. The average size of the pore (average pore diameter) in the porous particle is not particularly limited, but for example, it is 10 nm or more and 100 nm or less. Also, there are no particular limitations on the pore capacity in the porous particle, and for example, it is 0.10 cm³/g or more and 0.50 cm³/g or less.

The carbon-containing layer is a layer containing at least carbon (C element). The carbon-containing layer may contain just carbon, and may contain other components. Examples of the other components may include a binder. The binder will be described in "4. Anode layer".

The carbon-containing layer may cover a part of the surface of the Si-based active material, and may cover the entire surface. In the former case, the coverage of the carbon-containing layer is, for example, 40% or more and may be 50% or more. Also, the coverage of the carbon-containing layer is, for example, 90% or less, may be 80% or less, and may be 70% or less.

The thickness of the carbon-containing layer is not particularly limited, but for example, it is 1 nm or more and 100 nm or less. There are no particular limitations on the method for forming the carbon-containing layer, and examples thereof may include a vapor deposition method such as CVD (Chemical Vapor Deposition), and a wet coating method using a slurry containing carbon.

The composite active material may be a primary particle, and may be a secondary particle which is aggregation of the primary particles. The average particle size (D₅₀) of the composite active material is, for example, 10 nm or more and 50 µm or less. The average particle size (D₅₀) refers to 50% accumulation particle size in a volume-based particle size distribution by a laser diffraction particle distribution measurement device.

The proportion of the composite active material in the anode layer is not particularly limited, and for example, it is 15 weight% or more, may be 20 weight% or more, may be 30 weight% or more, and may be 40 weight% or more. Meanwhile, the proportion of the composite active material is, for example, 80 weight% or less, may be 70 weight% or less, may be 60 weight% or less, and may be 50 weight% or less.

### 2. Carbon-based active material

The carbon-based active material in the present disclosure includes a hydroxyl group on its surface. Whether the hydroxyl group is included or not can be confirmed by, for example, a neutralization titration method such as Bohem method, and a spectroscopy method such as XPS (X-ray photoelectron spectroscopy). Here, the hydroxyl group may be inevitably present on the surface of the carbon-based active material. In this point, such an inevitable hydroxyl group is not included in the hydroxyl group in the present specification. For example, when the hydroxyl group amount by a neutralization titration method is 0.05 mmol/g or less, it can be judged that the carbon-based active material does not include the hydroxyl group.

The hydroxyl group amount is, for example, 0.10 mmol/g or more, may be 0.30 mmol/g or more, and may be 0.50 mmol/g or more. Meanwhile, the hydroxyl group amount is, for example, 1.00 mmol/g or less, may be 0.80 mmol/g or less, and may be 0.65 mmol/g or less.

Here, the carbon-containing layer in the composite active material described above may include the hydroxyl group on its surface, and may not include the hydroxyl group, but the latter is preferable. This is because the affinity of the composite active material and the hydrophobic binder further improves. Meanwhile, in the former case, the amount of the hydroxyl group present on the surface of the carbon-containing layer is preferably less than the amount of the hydroxyl group present on the surface of the carbon-based active material.

The hydroxyl group may be a part of a carboxyl group, may be an alcoholic hydroxyl group, and may be a phenolic hydroxyl group. Among these, the phenolic hydroxyl group is preferable.

Examples of the carbon-based active material may include graphite, hard carbon, and soft carbon.

The proportion of the carbon-based active material in the anode layer is not particularly limited, and for example, it is 10 weight% or more, may be 20 weight% or more and may be 30 weight% or more. Meanwhile, the proportion of the carbon-based active material in the anode layer is 70 weight% or less, may be 60 weight% or less, and may be 50 weight% or less.

### 3. Hydrophobic binder

The hydrophobic binder in the present disclosure includes an aromatic group ring. The aromatic group ring is usually highly hydrophobic. Examples of the binder including the aromatic group ring may include polyimide and polyamideimide.

The polyimide is represented by the below formula (1). In the formula (1), R and R' are an aromatic group (aromatic group ring), and n is a repeating number.

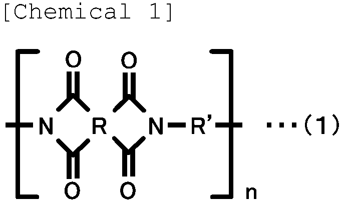

The weight average molecular weight of the polyimide is not particularly limited, but for example, it is 5000 or more and 500000 or less.

Here, in the anode layer, the weight of Si in the composite active material may be less than, or equal to, or more than the weight of the hydrophobic binder. The weight ratio of Si with respect to the weight of the hydrophobic binder is, for example, 0.5 or more, may be 0.8 or more, may be 0.83 or more, may be 1.0 or more, may be 2.0 or more, may be 2.5 or more, and may be 3.0 or more. If the ratio is too small, there is a risk that the sufficient capacity may not be obtained when used in a battery. Meanwhile, the ratio is, for example, 8.5 or less, may be 8.0 or less, may be 7.0 or less, may be 5.0 or less, and may be 3.5 or less. If the ratio is too large, there is a risk that the volume change of the composite active material may not be sufficiently suppressed by the binder. Here, the weight of Si means the weight of Si included in the Si-based active material. When the Si-based active material is a simple substance of Si, the weight of Si can be regarded as the weight of the Si-based active material. Meanwhile, when the Si-based active material is a Si alloy, a Si oxide, and a Si composite, and contains elements other than Si, the weight of Si can be regarded as the weight excluding the elements other than Si from the Si-based active material.

The proportion of the hydrophobic binder in the anode layer is, for example, 0.01 weight% or more and 5 weight% or less.

### 4. Anode layer

The anode layer in the present disclosure may contain a conductive material as required. Examples of the conductive material may include a carbon material, a metal particle, and a conductive polymer. Examples of the carbon material may include a particulate carbon material such as acetylene black (AB) and Ketjen black (KB), and a fiber carbon material such as carbon fiber, carbon nanotube (CNT), and carbon nanofiber (CNF). The proportion of the conductive material in the anode layer is, for example, 1 weight% or more and 5 weight% or less.

Also, the anode layer may contain a binder other than the hydrophobic binder including the aromatic group ring described above. Examples of the binder may include a rubber-based binder and a fluoride-based binder. The proportion of the hydrophobic binder including the aromatic group ring to all the binder is, for example, 60 weight% or more and 99 weight% or less.

The thickness of the anode layer is not particularly limited, but for example, it is 0.1 µm or more and 1000 µm or less. Also, the anode layer in the present disclosure is usually used for a battery. The battery will be described in "B. Battery". Also, there are no particular limitations on the method for producing the anode layer in the present disclosure, but for example, it can be produced by a method described in "C. Method for producing anode layer".

### B. Battery

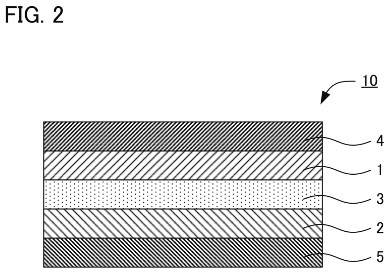

FIG. 2 is a schematic cross-sectional view exemplifying the battery in the present disclosure. Battery 10 shown in FIG. 2 includes cathode layer 1, anode layer 2, electrolyte layer 3 arranged between the cathode layer 1 and the anode layer 2, cathode current collector 4 for collecting currents of the cathode layer 1, and anode current collector 5 for collecting currents of the anode layer 2. In the present disclosure, the anode layer 2 is the anode layer described in "A. Anode".

According to the present disclosure, since the anode layer described above is included, the volume change of the battery is suppressed. As a result, necessity of usage of a restraining member in a large size is low, and the decrease of energy density of the battery can be inhibited.

### 1. Anode layer

The anode layer is in the same contents as those described in "A. Anode layer", thus the description is omitted.

### 2. Cathode layer

The cathode layer is a layer containing at least a cathode active material. Also, the cathode layer may contain at least one of an electrolyte, a conductive material, and a binder, as required. The conductive material and the binder are in the same contents as those described in "A. Anode layer". Incidentally, the cathode layer may contain the hydrophobic binder including the aromatic group ring described above as the binder. The electrolyte will be described in "3. Electrolyte layer".

Examples of the cathode active material may include an oxide active material. Examples of the oxide active material may include a rock salt bed type active material such as LiCoO₂, LiMnO₂, LiNiO₂, LiVO₂, and LiNi_{1/3}Co_{1/3}Mn_{1/3}O₂; a spinel type active material such as LiMn₂O₄, Li₄Ti₅O₁₂, and Li(Ni_{0.5}Mn_{1.5})O₄; and an olivine type active material such as LiFePO₄, LiMnPO₄, LiMnFePO₄, LiNiPO₄, and LiCoPO₄.

Examples of the shape of the cathode active material may include a granular shape. The average particle size (D₅₀) of the cathode active material is not particularly limited, and for example, it is 10 nm or more, and may be 100 nm or more. Meanwhile, the average particle size (D₅₀) of the cathode active material is, for example, 50 µm or less, and may be 20 µm or less. The D₅₀ is as described above.

The proportion of the cathode active material in the cathode layer is, for example, 20 weight% or more and 80 weight% or less. The thickness of the cathode layer is, for example, 0.1 µm or more and 1000 µm or less.

### 3. Electrolyte layer

The electrolyte layer is a layer formed between the cathode layer and the anode layer, and contains at least an electrolyte. Also, the electrolyte layer may contain a binder as required. The binder is in the same contents as those described in "A. Anode layer".

The electrolyte may be an electrolyte solution (liquid electrolyte) and may be a solid electrolyte, but the former is preferable.

The liquid electrolyte preferably contains a supporting salt and a solvent. Examples of the supporting salt (lithium salt) of the electrolyte including lithium ion conductivity may include an inorganic lithium salt such as LiPF₆, LiBF₄, LiClO₄, and LiAsF₆; and an organic lithium salt such as LiCF₃SO₃, LiN(CF₃SO₂)₂, LiN(C₂F₅SO₂)₂, LiN(FSO₂)₂, and LiC(CF₃SO₂)₃. Examples of the solvent used for the electrolyte may include a cyclic ester (cyclic carbonate) such as ethylene carbonate (EC), propylene carbonate (PC) and butylene carbonate (BC); and a chain ester (chain carbonate) such as dimethyl carbonate (DMC), diethyl carbonate (DEC), and ethyl methyl carbonate (EMC).

Examples of the solid electrolyte may include an organic electrolyte such as a polymer electrolyte and a gel electrolyte; and an inorganic solid electrolyte such as a sulfide solid electrolyte, an oxide solid electrolyte, and a halide solid electrolyte.

The electrolyte layer may be a layer in which the separator that is a porous film is impregnated with the above described liquid electrolyte. Meanwhile, the electrolyte layer may be a solid electrolyte layer containing the solid electrolyte described above. The material of the separator may be an organic material, and may be an inorganic material. Specific examples thereof may include polyethylene (PE), polypropylene (PP), cellulose, polyvinylidene fluoride, polyamide, and polyimide. The separator may be an unwoven fabric such as a resin unwoven fabric and a glass fiber unwoven fabric, and a ceramic porous film. Also, the separator may be a single layer structure, and may be a multilayer structure. Examples of the separator of the multilayer structure may include a two-layer structure separator of PE-PP, and a three-layer structure separator of PP-PE-PP or PE-PP-PE.

### 4. Other constitutions

The battery in the present disclosure preferably includes a cathode current collector for collecting currents of the cathode layer, and an anode current collector for collecting currents of the anode layer. Examples of the material for the cathode current collector may include SUS, aluminum, nickel, iron, titanium, and carbon. Meanwhile, examples of the material for the anode current collector may include SUS, copper, nickel, and carbon.

The battery in the present disclosure may further include a restraining jig that applies a restraining pressure along with the thickness direction of the cathode layer, the electrolyte layer and the anode layer. In particular, when the electrolyte layer is a solid electrolyte layer, it is preferable to apply a restraining pressure to form excellent ion conducting path and electron conducting path. The restraining pressure is, for example, 0.1 MPa or more, may be 1 MPa or more, and may be 5 MPa or more. Meanwhile, the restraining pressure is, for example, 100 MPa or less, may be 50 MPa or less, and may be 20 MPa or less.

### 5. Battery

The kind of the battery in the present disclosure is not particularly limited, but is typically a lithium ion battery. Also, the battery in the present disclosure may be a liquid battery in which the electrolyte layer contains a liquid electrolyte, and may be a solid state battery in which the electrolyte layer contains a solid electrolyte. The solid state battery may be a semisolid state battery and may be an all solid state battery. In the present disclosure, the semisolid state battery is a battery in which the electrolyte layer includes a solid electrolyte and a liquid component (such as ionic solution). In the present disclosure, the all solid state battery is a battery in which the electrolyte layer includes only the inorganic solid electrolyte as the electrolyte. Also, the battery in the present disclosure may be a primary battery and may be a secondary battery, but preferably a secondary battery among them. The reason therefor is to be repeatedly charged and discharged and useful as a car-mounted battery for example.

Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

### C. Method for producing anode layer

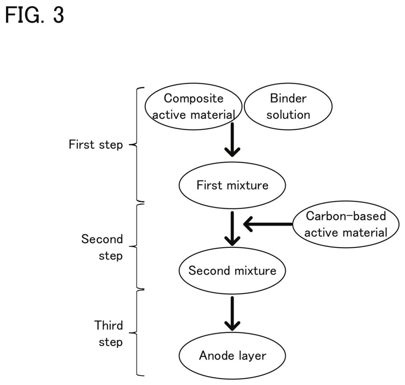

FIG. 3 is a flow chart exemplifying the method for producing the anode layer in the present disclosure. As shown in FIG. 3, in the method for producing the anode layer in the present disclosure, first, a first mixture is obtained by mixing the composite active material with a binder solution (a solution in which the hydrophobic binder or a precursor of the hydrophobic binder is dissolved in a solvent) (a first step). Next, a second mixture is obtained by adding the carbon-based active material to the first mixture and mixing (a second step). Then, the anode layer is formed by using the second mixture (a third step).

According to the present disclosure, the composite active material is mixed with the hydrophobic binder (or the precursor material) prior to the carbon-based active material, and thus the binder can be further localized around the composite active material. As a result, with the production method in the present disclosure, an anode layer of which volume change amount is further suppressed can be produced. Incidentally, as described in Example 2 later, even when the binder solution and the carbon-based active material are mixed, and then mixed with the composite active material, it is possible to obtain the anode layer of which volume change amount is suppressed.

### 1. First step

In the first step, a first mixture is obtained by mixing the composite active material with the hydrophobic binder or a precursor of the hydrophobic binder. The composite active material and the hydrophobic binder are in the same contents as those described in "A. Anode layer".

In the first step, a precursor of the hydrophobic binder may be used. For example, when the hydrophobic binder is polyimide, polyamic acid may be used in the first step. In this case, in the later described third step, it is preferable to perform imidization treatment.

The hydrophobic binder and the precursor material may be in a state of a binder solution which is dissolved in a solvent. In other words, the first mixture may be a slurry. There are no particular limitations on the solvent, and examples thereof may include an organic solvent such as N-methyl-2-pyrrolidone (NMP).

There are no particular limitations on the method for mixing, and known methods can be used. The ratio of the composite active material and the binder solution is appropriately adjusted in accordance with the desired anode layer.

### 2. Second step

In the second step, a second mixture is obtained by adding the carbon-based active material (a carbon-based active material including a hydroxyl group on its surface) to the first mixture. The carbon-based active material is in the same contents as those described in "A. Anode layer".

In the second step, a solvent may be added. The solvent is as described above. There are no particular limitations on the method for mixing, and known methods can be used. Also, the ratio of the carbon-based active material is appropriately adjusted in accordance with the desired anode layer.

### 3. Third step

The third step is a step of forming the above described anode layer by using the second mixture. There are no particular limitations on the method for forming the anode layer as long as the above described anode layer can be obtained. Examples thereof may include a method in which the second mixture is applied on a metal plate and dried. The metal plate may be a substrate for transferring, and may be an anode current collector. Incidentally, in the third step, it is sufficient that the above described anode layer can be finally obtained. In other words, the third step may include a treatment of forming a precursor layer by applying the second mixture on a substrate and drying, and an imidization treatment to obtain polyimide from the polyamic acid by heating the precursor.

### 4. Anode layer

The anode layer to be produced by the above described method is in the same contents as those described in "A. Anode layer", thus the descriptions herein are omitted.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Comparative Example 1]

### <Production of anode layer>

As a carbon-based active material, graphite to which a surface oxidization treatment described later was not performed was prepared. Also, a composite active material including a carbon-containing layer produced by wet coating the surface of SiO was prepared. Also, a binder solution in which polyamic acid is dissolved in a solvent (NMP) was prepared.

A second mixture (anode slurry) was produced by a flow shown in FIG. 3 using the above materials (method A). The adding amounts of the composite active material and the binder solution were the ratio shown in Table 1. Also, the ratio of graphite was adjusted so that the ratio (solid content ratio) of the graphite and the composite active material to the binder solution became 10 : 90. A precursor layer was formed by applying the obtained anode slurry on an anode current collector (Cu foil, 10 µm thick) and drying. The precursor layer was heated at 350°C for 12 hours in an Ar flow to imidize the polyamic acid, and thereby polyimide was formed. In this manner, an anode layer containing the composite active material, the carbon-based active material, and the hydrophobic binder (polyimide: PI) was produced.

Here, the weight ratio of Si in the composite active material with respect to the weight of the hydrophobic binder (PI), which is Si/PI ratio, was obtained in the following manner.

The composite active material was weighed in a specified amount, and Si was extracted by a hydrofluoric acid treatment. After that, the weight of Si was obtained from an ICP emission spectral analysis method. The weight of Si in the produced anode layer was obtained from the ratio of the weighed amount and the amount actually added (additive composition substantial amount).

The binder solution was weighed in a specified amount, dried at 200°C, and a solid content ratio (polyamic acid amount) in the binder solution was obtained to calculate the polyimide amount from the polyamic acid. The weight of polyimide in the produced anode layer was obtained from the ratio of the weighed amount and the amount actually added (additive composition substantial amount).

The Si/PI was calculated from the above described Si element amount and polyimide amount. The results are shown in Table 1.

### <Production of evaluation battery>

An evaluation battery (liquid-based battery; winding battery) was produced using the anode layer. The materials of each member are as follows.

As the cathode layer, a layer containing an oxide active material (NCM: LiNi_{1/3}Co_{1/3}Mn_{1/3}O₂), a carbon-based conductive material (AB), and a fluorine-based binder (PVdF) was used. Incidentally, the ratio of the oxide active material, the carbon-based conductive material, and the fluorine-based binder in the cathode layer was 92 : 5 : 3 in the weight ratio. Also, as the cathode current collector, an Al foil having a thickness of 15 µm was used.

As the electrolyte layer, a separator having a three layer structure of polypropylene (PP) - polyethylene (PE) - polypropylene (PP) and a thickness of 24 µm was used. Incidentally, one surface (surface facing to the cathode layer) of the separator was coated with ceramic in a thickness of 4 µm.

As the liquid electrolyte, a liquid electrolyte containing an electrolyte containing ethylene carbonate (EC), dimethyl carbonate (DMC), ethylmethyl carbonate (EMC), and fluoroethylene carbonate (FEC) in a volume ratio of 3 : 3 : 3 : 1, and an electrolyte salt (LiPF₆; 1mol/L) was used.

A battery was produced in the following manner using the above described materials. First, the anode (anode layer and anode current collector) and the cathode (cathode layer and cathode current collector) were winded interposing a separator to produce an electrode group. Next, a current collecting plate with a lid was welded to the both ends of the electrode group, inserted to a case, and the lid plate and the case were welded. The liquid electrolyte was injected from an injection hole, and then the injection hole was sealed using a bolt. The product was placed still for a certain time, and the liquid electrolyte was permeated to each layer. Then, after the initial charge, an aging was performed at 60°C. Thereby, an evaluation battery was produced.

### [Comparative Example 2]

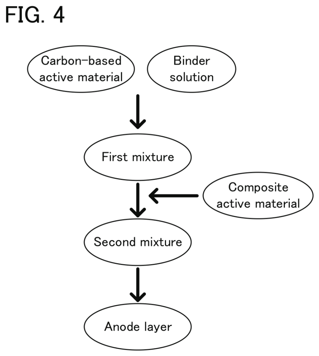

A second mixture (anode slurry) was produced by changing the flow to the one shown in FIG. 4 (method B). In specific, graphite to which a surface oxidization treatment was not performed was mixed with the binder solution, and then the composite active material was added and mixed to produce the second mixture. An evaluation battery was produced in the same manner as in Comparative Example 1, except that this anode slurry was used.

### [Example 1]

A surface oxidization treatment was performed at 40°C for 1 hour in an oil bath using graphite and concentrated sulfuric acid. Thereby, graphite including a phenolic hydroxyl group on its surface was prepared. An evaluation battery was produced in the same manner as in Comparative Example 1 except that this graphite was used.

### [Examples 2 to 7]

An evaluation battery was respectively produced in the same manner as in Example 1, except that at least one of the adding amount of the composite active material, the adding amount of the binder solution, the Si/PI ratio, and the production method of the anode slurry was changed as shown in Table 1.

### [Evaluation]

### <Measurement of hydroxyl group amount>

Regarding the carbon-based active materials used in Comparative Examples 1 to 2 and Examples 1 to 7, the hydroxyl group amount was determined by a Boehm method. The results are shown in Table 1. Incidentally, the hydroxyl group amount of 0.05 mmol/g was also confirmed in Comparative Examples 1 and 2, but this was considered a hydroxyl group inevitably present, and thus it was judged that the graphite used in Comparative Examples 1 to 2 did not include the hydroxyl group.

### <Measurement of expansion rate>

The produced evaluation batteries were charged by installing to a restraining jig to which a contact type displacement gauge was attached. The batteries were charged until 4.25 V at 0.1 C. The displacement magnitude obtained at this time was divided by the thickness when the batteries were produced to calculate the expansion rate (expansion rate of anode layer) (%). The results are shown in Table 1.

**[Table 1]**

| | Carbon-based active material | Composite active material | Binder solution | Si/PI ratio | Production method | Expansion rate (%) |
|---|---|---|---|---|---|---|
| | Hydroxyl group amount (mmol/g) | Adding amount (wt. %) | Adding amount (wt. %) | | | |
| Comp. Ex. 1 | - | 20 | 10 | 1.00 | A | 114 |
| Example 1 | 0.65 | 20 | 10 | 1.00 | A | 108 |
| Comp. Ex. 2 | - | 20 | 10 | 1.00 | B | 113 |
| Example 2 | 0.65 | 20 | 10 | 1.00 | B | 106 |
| Example 3 | 0.65 | 50 | 10 | 2.50 | A | 109 |
| Example 4 | 0.65 | 50 | 5 | 5.00 | A | 111 |
| Example 5 | 0.65 | 70 | 10 | 3.50 | A | 110 |
| Example 6 | 0.65 | 70 | 15 | 2.33 | A | 109 |
| Example 7 | 0.65 | 20 | 12 | 0.83 | A | 111 |

As shown in Table 1, it was confirmed that the expansion rate of Examples 1 to 7 was respectively smaller compared to that of Comparative Examples 1 and 2, and the volume change of the anode layer was suppressed. Also, from Comparative Examples 1 to 2 and Examples 1 to 2, when the anode slurry was produced by the production method in the present disclosure (method A), the expansion rate was further suppressed. This is presumed that since the binder solution was mixed with the composite active material prior to the carbon-based active material, the binder and the composite active material were attached better, and the binder was more localized around the composite active material in the anode layer.

### Reference Sings List

- 1: cathode layer
- 2: anode layer
- 3: electrolyte layer
- 4: cathode current collector
- 5: anode current collector
- 10: battery

## Claims

1. An anode layer **characterized by** comprising a composite active material, a carbon-based active material, and a binder, wherein
the composite active material includes a Si-based active material, and a carbon-containing layer covering at least a part of a surface of the Si-based active material;
the carbon-based active material includes a hydroxyl group on its surface; and
the binder is a hydrophobic binder including an aromatic group ring.

2. The anode layer according to claim 1, **characterized in that** a weight ratio of Si in the composite active material with respect to a weight of the hydrophobic binder is 0.5 or more and 8.5 or less.

3. The anode layer according to claim 2, **characterized in that** the ratio is 0.8 or more.

4. The anode layer according to claim 2, **characterized in that** the ratio is 5.0 or less.

5. The anode layer according to claim 1, **characterized in that** an amount of the hydroxyl group is 0.10 mmol/g or more.

6. The anode layer according to claim 1, **characterized in that** an amount of the hydroxyl group is 0.50 mmol/g or more.

7. The anode layer according to claim 1, **characterized in that** the carbon-based active material contains a phenolic hydroxyl group as the hydroxyl group.

8. The anode layer according to claim 1 **characterized by** comprising a polyimide as the hydrophobic binder.

9. The anode layer according to claim 1 **characterized by** comprising a graphite as the carbon-based active material.

10. A battery comprising a cathode layer, an anode layer, and an electrolyte layer arranged between the cathode layer and the anode layer, **characterized in that**
the anode layer is the anode layer according to any one of claims 1 to 9.

11. A method for producing the anode layer according to any one of claims 1 to 9, the method **characterized by** comprising:
a first step of obtaining a first mixture by mixing the composite active material with the hydrophobic binder or a precursor of the hydrophobic binder;
a second step of obtaining a second mixture by adding the carbon-based active material to the first mixture and mixing; and
a third step of forming the anode layer using the second mixture.
